# EUROPEAN PATENT APPLICATION

(11) **EP 2 221 917 A1**
(43) Date of publication of application: **25.08.2010**
(21) Application number: 08845795.7
(22) Date of filing: 29.10.2008
(51) Int. Cl.: H01Q 1/48, H01Q 1/24, H01Q 3/44, H04B 1/38, H04M 1/02

(54) **PORTABLE WIRELESS DEVICE**

(30) Priority: 31.10.2007 JP 2007282574
(71) Applicant: Sharp Kabushiki Kaisha, Osaka-shi, Osaka 545-8522 (JP)
(72) Inventor: KONDO, Toshinori, Osaka-shi, Osaka 545-8522 (JP); TAKEBE, Hiroyuki, Osaka-shi, Osaka 545-8522 (JP)
(74) Representative: Müller - Hoffmann & Partner
(86) International application number: PCT/JP2008/069643
(87) International publication number: WO 2009/057634

(57) **Abstract**

A portable wireless apparatus 100 connects, with a thin coaxial cable 121, electrical signals of first and second circuit members 111 and 112 housed within first and second casings 101 and 102 that are openably/closably joined by a third casing 103 comprising a hinge portion 104, connects the first and second circuit members 111 and 112 with a connecting element 122 via a reactance-switchable reactance element 123, and comprises, at the second casing 102 near the hinge portion 104, first, second and third antennas 131, 132 and 133. Even if the first casing 101 is rotated by approximately 90 degrees within substantially the same plane, favorable antenna characteristics are attained at a given frequency by switching the connection impedance of the first and second casings 101 and 102 depending on the respective used frequencies for each state of the terminal. Thus, it becomes possible to provide a portable wireless apparatus in which inter-casing connection is established in an ideal manner by switching the connection impedance between the casings at a given frequency, and in which favorable antenna characteristics are attained at given frequencies for each given state.

## Description

### TECHNICAL FIELD

The present invention relates to a portable wireless apparatus, and more particularly to a portable wireless apparatus capable of realizing favorable antenna characteristics at a given frequency for each state of the terminal.

### BACKGROUND ART

With respect to portable wireless apparatus of late, there is an increasing demand not only for call and e-mail functionality, but also for various communication services such as television broadcast reception functions, Internet connection functions, etc. In order to accommodate such needs while realizing high-quality communications, it is becoming common to equip portable wireless apparatus with an antenna having wideband antenna characteristics or with a plurality of antennas. In addition, portable wireless apparatus that enhance convenience by making it possible to change the form thereof depending on the communication service or content being used are often found as well.

Attaining favorable antenna characteristics over a wide band or a plurality of frequency bands as mentioned above with one portable wireless apparatus entails certain difficulties. In particular, in the case of a foldable portable wireless apparatus comprising two casings, namely, upper and lower casings, favorable antenna characteristics across all used frequency bands sometimes cannot be attained with just a single connection between the upper and lower casings.

As such, with respect to foldable portable wireless apparatus, by switching the connection impedance of the upper and lower casings, it is possible to, though electrical dimensions of a certain level would be demanded of the antenna(s), attain favorable characteristics for each frequency and each antenna.

As a portable wireless apparatus having a means for connecting upper and lower casings via a reactance element, there is, for example, the portable wireless apparatus disclosed in Patent Citation 1 mentioned below. By connecting two casings, namely, upper and lower casings, via a reactance element in addition to a connection cable, and switching the connection impedance as it is opened/closed, this portable wireless apparatus is capable of attaining favorable antenna characteristics in both opened and closed states.
Patent Citation 1: Japanese Patent Publication (Kokai) No. 2005-57664 A

### DISCLOSURE OF THE INVENTION

### TECHNICAL PROBLEM

However, in the technique disclosed in the above-mentioned Patent Citation 1 wherein the connection impedance of the upper and lower casings is switched, switching is merely performed in accordance with the open/close state and does not accommodate variations in frequency. In the case of a portable wireless apparatus comprising a wideband antenna whose fractional bandwidth would be approximately 50 % as in the UHF (Ultra High Frequency: 470-770 MHz) band, which is the terrestrial digital broadcasting band in Japan, or a plurality of antennas that are respectively excited at desired frequencies, the portable wireless apparatus having a state in which the upper casing rotates within substantially the same plane, favorable antenna characteristics sometimes cannot be attained across all used frequency bands by simply switching the connection of the upper and lower casings in accordance with opening/closing or with the rotation of the upper casing.

The present invention is made in view of the points discussed above, and its object is to attain, even in cases where an antenna or a plurality of antennas that support(s) wideband used frequencies is/are disposed, favorable antenna characteristics at each frequency band in accordance with opening/closing or the state of rotation of the upper casing.

### TECHNICAL SOLUTION

A portable wireless apparatus according to the present invention comprises, separately from a cable including a signal line that connects first and second circuit members housed in an upper casing as a first casing and a lower casing as a second casing, a connecting element that connects via a reactance element that switches reactance depending on the used frequency.

According to this configuration, by switching the connection impedance of the upper and lower casings depending on the used frequency, it is possible to adjust the upper and lower casings to an optimal connection impedance even in cases where there is/are an antenna that supports wideband used frequencies or a plurality of antennas that are respectively excited at desired frequencies, and favorable antenna characteristics are thus attained at each frequency. For example, by extending the electrical length of the first circuit member and also extending the path of the reverse-phase current, the frequency at which a reverse-phase current occurs can be shifted to the lower-band side. Further, when the electrical length of the first circuit member is shortened, the path of the reverse-phase current also becomes shorter, and the frequency at which a reverse-phase current occurs can thus be shifted to the upper-band side.

In addition, as with a whip antenna that is fed near a hinge portion that openably/closably connects the upper and lower casings, when the first casing of the portable wireless apparatus and the antenna are close to each other in the opened state, the current in the antenna and the current in the first casing may cancel each other out to cause degradation in characteristics in some cases as a result of a current of a reverse phase relative to the current flowing in the antenna flowing in the first casing at a certain frequency. In particular, in a configuration having a third casing comprising a rotation mechanism portion that renders the first casing rotatable and a hinge portion that renders the second casing openable/closable, the cable including the signal line becomes longer as it passes through the interior of the third casing, and the first circuit member would appear considerably long. As a result, with the dimensions of standard portable wireless apparatus of late, reverse-phase currents occur at such low frequencies as the UHF band. Further, although a higher-order mode occurs in the reverse-phase current that occurs in the first casing, because degradation in antenna characteristics by both a basic mode and the higher-order mode of the reverse-phase current can be prevented by a reactance-switchable reactance element, it is suitable for such a configuration.

In addition, if there is included a plurality of antennas near the hinge portion, by switching the connection impedance of the upper and lower casings for each antenna to make an adjustment to an optimal reactance, it is possible to attain favorable antenna characteristics with each antenna.

In addition, even if there is included a state in which the first casing is rotatable by approximately 90 degrees within substantially the same plane, it is preferable that the switching of reactance be possible at each frequency with respect to each of a state in which the upper casing is rotated, a state in which it is not rotated, and a state in which the upper and lower casings are so closed as to substantially overlap with each other.

In addition, if the third casing made of an electrically conductive member and comprising a mechanism for the upper casing to rotate by approximately 90 degrees is used, it is preferable that the third casing be made part of the connecting element.

In addition, in order to increase the degree of freedom of adjustment of the connection impedance of the upper and lower casings, it is preferable that not just one connecting element via the reactance-switchable reactance element but a plurality of them be disposed.

In addition, there is provided a foldable portable wireless apparatus comprising: a first casing; a second casing; a first circuit member housed within the first casing; a second circuit member housed within the second casing; a hinge portion that openably/closably joins the first casing and the second casing; an antenna disposed at the second casing near the hinge portion; and a cable including a signal line that connects the first circuit member and the second circuit member, wherein the portable wireless apparatus comprises a connection impedance switching mechanism that switches a connection impedance between the casings at a given frequency.

In addition, there is provided a reactance element switching method for the portable wireless apparatus described above, the switching method comprising: a step of reading out, when a remote control key ID is received, from a frequency table stored in a storage portion a center frequency of a broadcast corresponding to the remote control key ID that is inputted, and of issuing an instruction to switch the broadcast to reception of the center frequency; a step of comparing a frequency for which a broadcast tuning operation has been instructed and the center frequency; and a step of controlling so as to set a connection within a reactance element to the side of a capacitive element if the instructed frequency is equal to or less than the center frequency, and of controlling so as to set the connection within the reactance element to the side of an inductive element if the instructed frequency is equal to or greater than the center frequency.

A program for causing a computer to execute the above-mentioned method and a computer readable recording medium on which such a program is recorded are covered within the scope of the present invention, and an embodiment may also be such that the program is acquired by means of a transmission medium.

### ADVANTAGEOUS EFFECTS

According to the present invention, favorable antenna characteristics can be attained at each frequency band and for each state of a portable wireless apparatus.

### BRIEF DESCRIPTION OF THE DRAWINGS

Figures 1(a) and (b) are diagrams showing one configuration example of a portable wireless apparatus according to the first embodiment of the present invention.
Figures 2(a) and (b) are charts showing antenna characteristics that are dependent on changes in the connection impedance of a portable wireless apparatus according to the present embodiment, and (c) and (d) are diagrams showing configuration examples of a reactance element and an inductive element.
Figure 3 is a diagram showing one configuration example of a connection impedance switching circuit of a portable wireless apparatus according to the present embodiment.
Figure 4 is a diagram showing one configuration example of a portable wireless apparatus according to the second embodiment of the present invention.
Figures 5(a) and (b) are diagrams showing a connection impedance switching circuit of a portable wireless apparatus according to the present embodiment.
Figures 6A(a) through (c) are diagrams showing a configuration example of a portable wireless apparatus according to the third embodiment of the present invention.
Figures 6B(a) through (c) are diagrams showing a configuration example of a portable wireless apparatus according to the third embodiment of the present invention.
Figure 7A shows charts indicating antenna characteristics that are dependent on changes in the connection impedance of a portable wireless apparatus according to the present embodiment.
Figure 7B is a diagram showing a switching circuit of a portable wireless apparatus according to the present embodiment.
Figures 8A(a) through (c) are diagrams showing a portable wireless apparatus that rotates by approximately 90 degrees within substantially the same plane by a hinge comprising a mechanism that is capable of opening/closing and of rotating a first casing.
Figures 8B(a) through (c) are diagrams showing states that are rotated by approximately 90 degrees from Figure 8A within substantially the same plane by the hinge comprising the mechanism that is capable of opening/closing and of rotating the first casing.
Figure 9A is an external view of a portable wireless apparatus according to the present embodiment.
Figure 9B is a functional block diagram showing one configuration example of a portable wireless apparatus according to the present embodiment.
Figure 10 is a table showing one example of a frequency table possessed by a storage portion of a portable wireless apparatus according to the present embodiment.
Figure 11 is a flowchart showing a processing flow with respect to a portable wireless apparatus according to the present embodiment.

### EXPLANATION OF REFERENCE

- 10, 100, 200: portable wireless apparatus (portable telephone apparatus)
- 1, 2, 101, 102, 103: casing
- 11, 12, 111, 112, 211, 212: circuit member
- 21, 121, 221: thin coaxial cable
- 22, 122, 222: connecting element
- 23, 123: reactance switchable reactance element
- 25, 27, 29, 125: capacitive element
- 26, 28, 126: inductive element
- 31, 32, 33, 131, 132, 133, 231: antenna
- 41, 42, 141, 142, 241: feed portion
- 51, 52, 151, 152: current
- 61, 62, 63: PIN diode

### BEST MODE FOR CARRYING OUT THE INVENTION

### (First Embodiment)

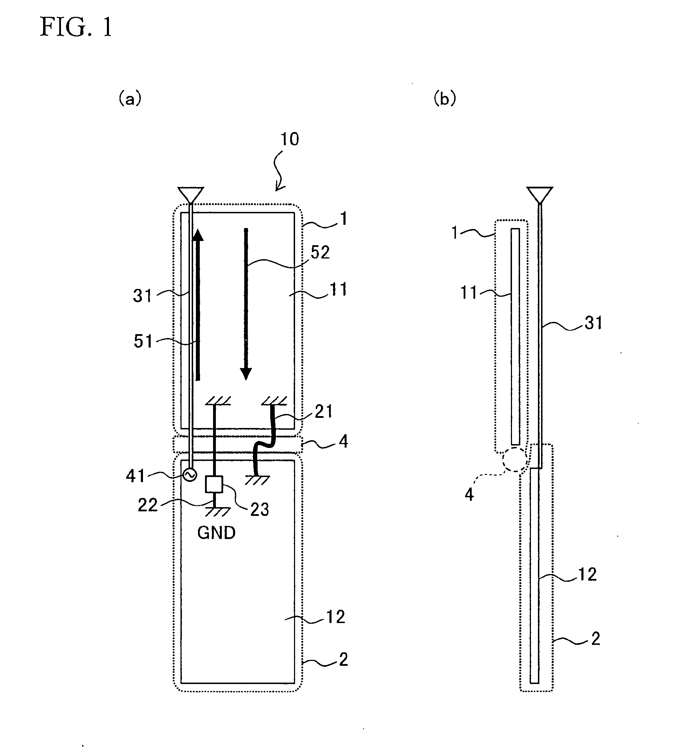

Various embodiments of the present invention are described below with reference to the drawings. Figure 1 shows diagrams indicating one configuration example of a portable wireless apparatus according to the first embodiment of the present invention where Figure 1(a) is a front view and Figure 1(b) is a side view. As shown in Figures 1(a) and (b), a portable wireless apparatus 10 according to the present embodiment connects first and second circuit members 11 and 12 with a thin coaxial cable 21 including a signal line for transmitting electrical signals of the first and second circuit members 11 and 12 respectively housed within first and second casings 1 and 2. Further, the first and second circuit members 11 and 12 are connected with a connecting element 22 comprising an electrically conductive pattern, etc., on a sheet metal or substrate via a reactance-switchable reactance element 23. There is provided a freely extendible/retractable whip antenna 31 that is housably attached to the second casing 2 and that is fed from a feed portion 41 in the second casing 2 near a hinge portion 4. It is noted that a notation of the letters GND has been added in one place only in Figure 1, and that the letters GND are omitted elsewhere.

The whip antenna 31 has an electrical length of approximately λ/4 relative to the used frequency, and the portable wireless apparatus 10 as a whole operates as an antenna by having a high-frequency current of a certain level passed through the first and second circuit members as well. The whip antenna 31 fed at the feed portion 41 overlaps with the first casing 1 when viewed from the front of the portable wireless apparatus. A current 52 of a reverse phase relative to a current 51 that flows in the whip antenna 31 flows in the first circuit member 11 at a specific frequency in accordance with the length of the first circuit member 11 and the connection conditions of the thin coaxial cable 21, and degradation in antenna characteristics is sometimes caused as a result of the currents 51 and 52 canceling each other out.

In particular, with the dimensions of standard portable wireless apparatus of late, there is a strong possibility that the reverse-phase current 52 discussed in the present embodiment would occur near the UHF band. A description will hereinafter be provided assuming that the whip antenna 31 is an antenna for broadcast reception and that the used band is the UHF band.

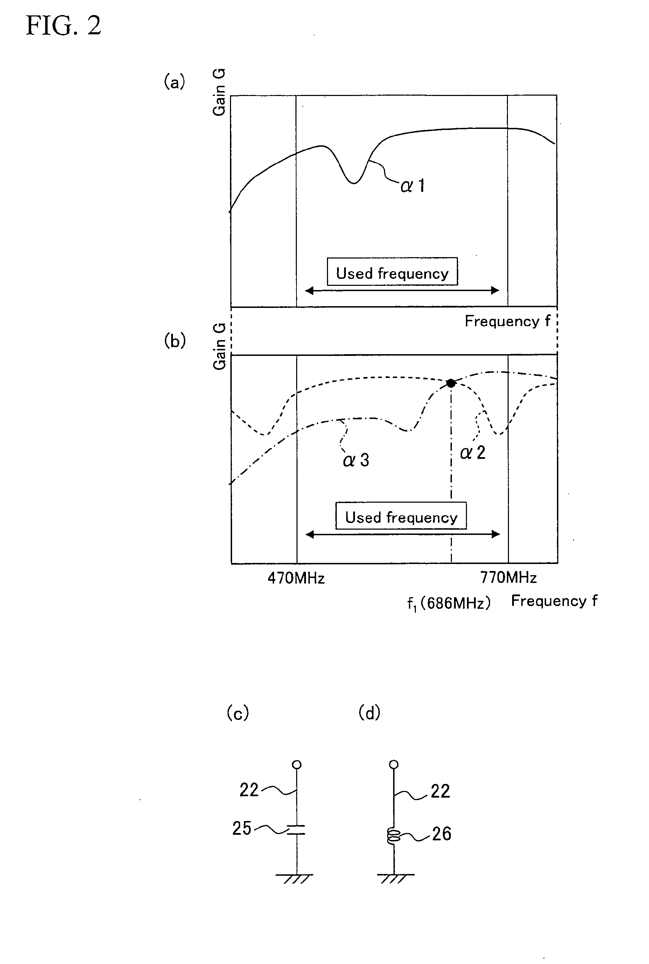

Figure 2 shows charts indicating antenna characteristics that are dependent on changes in the connection impedance of a portable wireless apparatus according to the present embodiment, where the horizontal axis represents frequency and the vertical axis represents gain G. Solid line α1 in Figure 2(a) is a chart representing the frequency characteristics of the gain of the whip antenna 31 in the UHF band, which is the television reception band in Japan, in a case where the portable wireless apparatus 10 shown in Figure 1 is not equipped with the connecting element 22 and the reactance element 23. The UHF band is a wide frequency band with a fractional bandwidth of approximately 50%, and with respect to such a wide band, without a means for adjusting the connection impedance of the first and second circuit members 11 and 12, degradation in antenna characteristics cannot be avoided if the reverse-phase current 52 were to occur.

The broken lines α2 and α3 in Figure 2(b) are charts representing the frequency characteristics of the gain of the whip antenna 31 in a case where the connecting element 22 and a reactance-unswitchable reactance element 23 are provided. The broken line α2 in Figure 2(b) represents antenna characteristics in a case where the capacitive element 25 shown in Figure 2(c) is taken to be the reactance element 23, and indicates that, because the electrical length of the first circuit member 11 becomes longer, the path of the reverse-phase current 52 also becomes longer, and that the frequency at which the reverse-phase current 52 occurs can thus be shifted towards the lower-band side. In addition, the broken line α3 in Figure 2(b) represents antenna characteristics in a case where the inductive element 26 shown in Figure 2(d) is taken to be the reactance element 23, and indicates that, because the electrical length of the first circuit member 11 becomes shorter, the path of the reverse-phase current 52 also becomes shorter, and that the frequency at which the reverse-phase current 52 occurs can thus be shifted towards the radio-frequency side.

However, because the reverse-phase current 52 can take various paths, a higher-order mode occurs. When the frequency at which the reverse-phase current 52 occurs is shifted towards the lower-band side by making the reactance capacitive, the frequency at which the higher-order mode of the reverse phase-sequence 52 occurs also shifts towards the lower-band side along therewith. It may be thought of as connecting to the second circuit member, which is a ground for the first circuit member 11, in parallel by the capacitive element. Assuming that j is an imaginary number, ω the angular frequency, and C the capacitance value, the connection impedance of the first and second circuit members 11 and 12 would be such that reactance varies in proportion to frequency and capacitance value as expressed by jωC. Thus, if the capacitance value is the same, the variation in reactance would be greater in the higher-order mode of the reverse-phase current 52 than in the basic mode. For this reason, with respect to the characteristics of α2 on the upper-band side, the gain is degraded by the higher-order mode of the reverse-phase current.

In addition, when the frequency at which the reverse-phase current 52 occurs is shifted towards the upper-band side by making the reactance inductive, it may be thought of as connecting to the second circuit member, which is a ground for the first circuit member 11, in parallel by the inductive element. Assuming L is the inductance value, the connection impedance of the first and second circuit members 11 and 12 is expressed as 1/jωL, and the reactance varies in inverse proportion to frequency ω and inductance value L. Thus, if the inductance value is the same, impedance becomes closer to the position of a short circuit on the Smith chart the lower the band is, and the first circuit member 11 would appear to be a strong ground for the whip antenna 31. Thus, because the electrical dimensions of the whip antenna 31 decrease, there is a disadvantage in that the antenna characteristics deteriorate particularly in the lower bands, and the gain of α3 on the lower-band side is degraded.

As described above, when there is no reactance element 23 as in Figure 2(a) or when the reactance of the reactance element 23 is unswitchable, favorable characteristics cannot be attained across all bands.

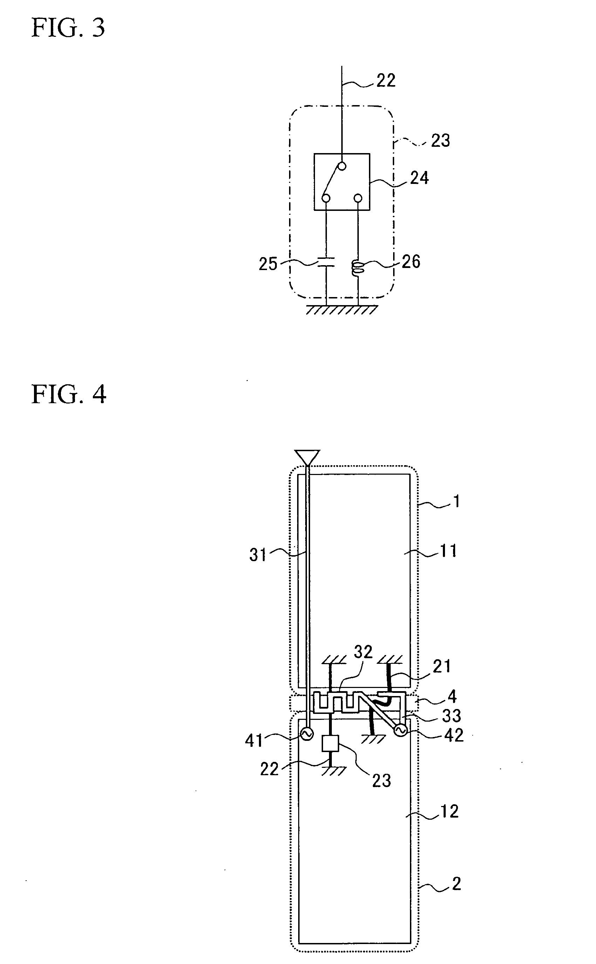

Figure 3 represents an example in which the reactance-switchable reactance element 23 is realized using an SPDT (Single Pole Double Throw) 24 so as to make it possible to select between capacitive and inductive depending on the frequency. The SPDT 24 has switching controlled by having a voltage applied by means of a bias circuit not shown in the drawings. It is indicated that when the SPDT 24 is connected to the same capacitive element 25 as that shown in Figure 2(c), frequency characteristics α2 of gain in Figure 2(a) are exhibited, and that when the SPDT 24 is connected to the same inductive element 26 as that shown in Figure 2(d), frequency characteristics α3 of gain in Figure 2(b) are exhibited. Thus, by connecting the SPDT 24 to the capacitive element 25 when using the whip antenna 31 at or below frequency f1 where α2 and α3 intersect and connecting the SPDT 24 to the inductive element 26 when using the whip antenna 31 at or above frequency f1, favorable antenna characteristics can be attained wherein degradation by the reverse-phase current 52 is prevented within the used frequency band. By way of example, the lower-band side is 470 MHz, the upper-band side is 770 MHz, and therebetween lies the used band.

It is noted that with the wireless communication apparatus shown in Figure 1, because the first circuit member 11 does not overlap with the whip antenna 31 provided at the second circuit member 12 in the closed state, the reverse-phase current 52 does not occur. Further, because the electrical dimensions of the whip antenna 31 also become greater, there is a strong likelihood that favorable antenna characteristics may be secured without switching the connection impedance of the first and second circuit members 11 and 12. However, if improvements in antenna characteristics are observed, switching may similarly be performed in the closed state as well.

In addition, although in the explanation above the reactance element 23 selects, from the two systems comprising the capacitive element 25 and the inductive element 26, one element by means of the SPDT 24 with a single frequency point for switching, it is also possible to increase the number of frequency points for switching by using a switching means capable of switching between three or more systems and thus increasing the number of elements to select from and/or allowing the selection of an open (not connected to any element or ground) state.

In addition, the whip antenna 31 comprises a apparatus having a tiltable structure that can be tilted in a given direction. However, since the influence of the reverse-phase current 52 is lessened when the whip antenna 31 is moved away from the first casing 1, the above-mentioned effects are diluted, but similar effects can be obtained even if the distance were to vary. The same applies when the whip antenna 31 and the first casing 1 move apart as a result of the open angle of the first casing 1 rising in a perpendicular direction.

In addition, although in the embodiment above an explanation was given through, by way of example, a case in which a whip antenna is provided, similar effects can be obtained with antennas of other forms such as L-shaped and helical forms.

In addition, although an explanation was given with respect to an example in which the SPDT 24 is used as the reactance-switchable reactance element 23, reactance may also be switched through the use of a PIN diode or a varicap.

In addition, the positional relationship between the whip antenna 31, the thin coaxial cable 21 and the connecting element 22 is not limited to the configuration according to the present embodiment.

The present embodiment, particularly with respect to the reactance switching operation using the SPDT 24, is described in further detail below with reference to the drawings and using a block diagram of the portable wireless apparatus and an operation flowchart of the portable wireless apparatus.

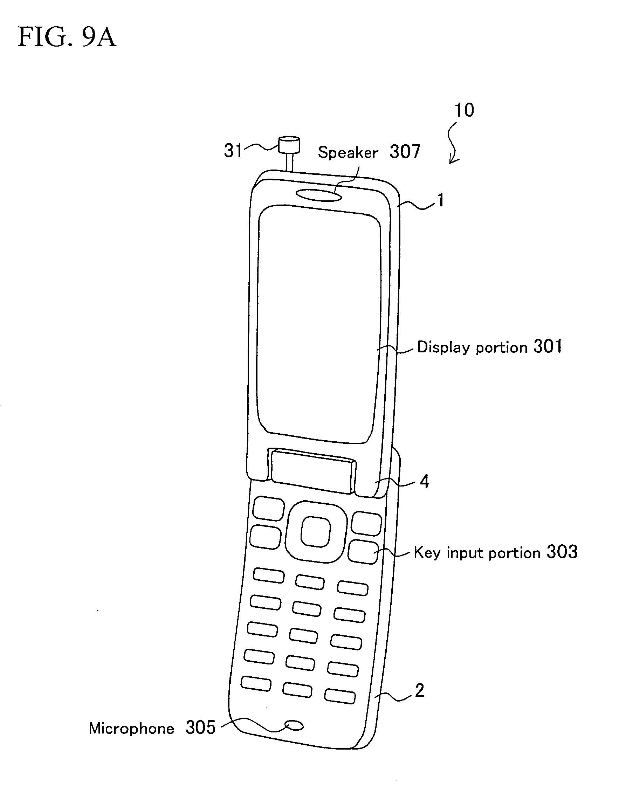

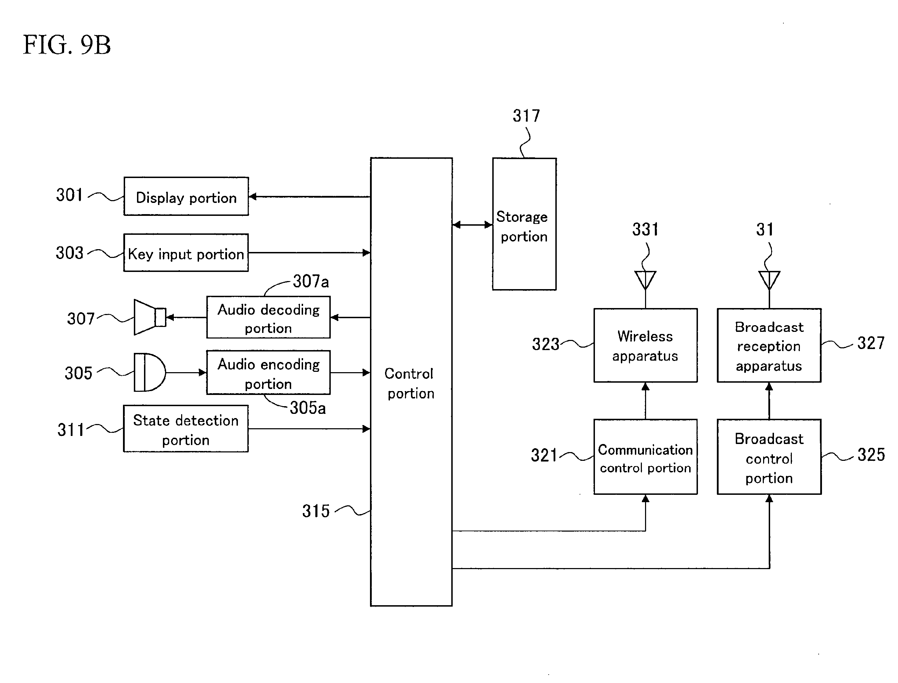

Figures 9A and B are an external view of the portable wireless apparatus 10 according to the present embodiment and a functional block diagram of the portable wireless apparatus 10. As shown in Figures 9A and B, the portable wireless apparatus 10 according to the present embodiment comprises: a control portion (CPU) 315 that controls the portable wireless apparatus 10; a storage portion 317 having a region that stores a frequency table which will be described later; a display portion 301 that displays TV images, etc., in accordance with commands from the control portion 315; a key input portion 303 that accepts key input from a user; a speaker 307 that outputs audio; an audio decoding portion 307a that outputs audio to the speaker 307; a microphone 305 for inputting audio; an audio encoding portion 305a that encodes audio inputted from the microphone 305; a state detection portion 311 that detects the state of the casing of the portable wireless apparatus (such states as folded, etc.); a communication control portion 321 that controls communications of the portable wireless apparatus; a wireless apparatus 323 that is controlled by the communication control portion 321 and executes communications; a communication antenna 331 that is connected to the wireless apparatus 323; a broadcast control portion 325 that controls television (One-Seg included) TV broadcast reception; a broadcast reception apparatus 327 that is controlled by the broadcast control portion 325 and receives a broadcast; and the whip antenna 31 connected to the broadcast reception apparatus 327. It is noted that the above-mentioned reactance element 23 is one of the elements of the broadcast reception apparatus 327.

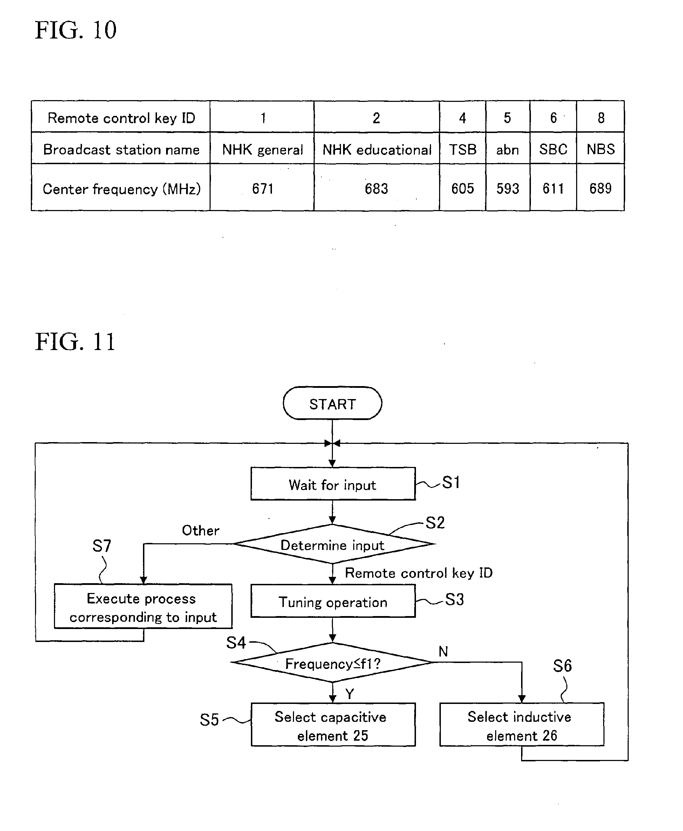

Figure 10 is a table showing one example of a frequency table that the storage portion 317 of the portable wireless apparatus according to the present embodiment has. The table shown in Figure 10, for purposes of convenience, is one in which, as a simple example, such information as broadcast stations, etc., that are relayed by Iida Relay Station in Nagano Prefecture is shown. The remote control key IDs shown in Figure 10 are numbers that are inputted to the apparatus through manipulations of a remote control, etc., from a user to specify a broadcast station. Center frequency is the frequency that is at the center of the broadcast wave of that broadcast expressed in MHz.

For example, with respect to a portable wireless apparatus according to the present embodiment, it can be seen that when remote control key ID = 1 is inputted, the broadcast station that is selected is NHK General, and that the center frequency of that broadcast is 671 MHz. A table like the one shown in Figure 10 is stored in the storage portion 317 for each broadcast station or each relay station. Figure 11 is a flowchart showing the processing flow with respect to a portable wireless apparatus according to the present embodiment. It is noted that frequency f1 at which α2 and α3 intersect in Figure 2(b) of the present embodiment is assumed to be 686 MHz, and that it is assumed that the broadcast control portion 325 has this information. In addition, it is assumed that the control portion 315, based on a remote control ID, has already selected the frequency table shown in Figure 10 from among numerous existing frequency tables.

Once processing is initiated (START), the control portion 315 waits for input from the key input portion 103 and the state detection portion 311 (step S1). In accordance with the input by a user from the key input portion 303, the control portion 315 determines the type of that input (step S2). If it is of an input type other than remote control key ID, the control portion 315 executes a process corresponding to that input type (step S7), and returns to the input waiting state (step S1).

If the input type from the key input portion 303 is a specification of a remote control key ID, the control portion 315 reads out from the frequency table (Figure 10) stored in the storage portion 317 the center frequency corresponding to the inputted remote control key ID, and issues an instruction to the broadcast control portion 325 to switch to reception of that frequency. The broadcast control portion 325 issues an instruction to the broadcast reception apparatus 327 to perform a tuning operation for the broadcast of that frequency, and the broadcast reception apparatus 327 performs broadcast reception (step S3).

Further, the broadcast control portion 325 determines whether or not the frequency instructed by the control portion 315 is of a value equal to or below f1 (step S4). If a frequency equal to or below f1 (for example, 671 MHz) is instructed, the broadcast reception apparatus 327 is so controlled as to set the connection within the reactance element 23 to the side of the capacitive element 25 (step S5). If a frequency greater than f1 is instructed, the broadcast reception apparatus 327 is so controlled as to set the connection within the reactance element 23 to the side of the inductive element 26 (step S6). In both cases of step S5 and step S6, after processing, it returns to the input waiting state.

It is noted that if both reception frequencies before and after the inputting of the remote control key ID are equal to or below f1, or if both are greater than f1, there is no need to alter the connection within the reactance element 23. For example, if the received station is changed from remote control key ID = 1 (NHK General, 671 MHz) to remote control key ID = 2 (NHK Educational, 683 MHz), since both frequencies are less than f1 (686 MHz), the connection within the reactance element 23 is not altered, and may be left connected to the side of the capacitive element 25.

By switching the reactance in accordance with the user's tuning settings through the process above, there is an advantage in that favorable characteristics can be attained across all frequency bands.

It is noted that, as described below, in the third embodiment of the present invention, a state relating to the form of the first casing 101 is detected by known detection means such as a magnetic sensor, etc., and reactance switching is performed in accordance with that state. This can be realized by performing the above-mentioned detection of the state of the casing at the state detection portion in Figure 9.

### (Second Embodiment)

The second embodiment of the present invention is described below with reference to the drawings. Figure 4 represents a configuration wherein second and third antennas 32 and 33 have been added near the hinge portion 4 of the portable wireless apparatus 10 according to the first embodiment. Like parts found in Figure 1 are assigned like reference numerals and descriptions thereof are omitted.

A description is given taking as an example a case where the used bands are the UHF band for the whip antenna 31, a W-CDMA (Wideband Code Division Multiple Access: 830-885 MHz) band in the 800 MHz band for the second antenna 32, and a W-CDMA (1920-2170 MHz) band in the 2 GHz band for the third antenna 33.

By configuring it as in the first embodiment, the whip antenna 31, whose used band is the UHF band, can attain favorable antenna characteristics.

As when the whip antenna 31 is used, if it is also made possible to switch the reactance of the reactance element 23 by detecting the antenna (synonymous with frequency) that is used when the second and third antennas 32 and 33 are used, it is possible to attain favorable antenna characteristics by adjusting the connection impedance of the first and second circuit members 11 and 12 also when the second and third antennas 32 and 33 are used.

With respect to the optimal connection impedance of the second antenna 32, whose used band is the 800 MHz band, if antenna characteristics improve by switching to the capacitive element 25 or the inductive element 26 with the SPDT 24 in the first embodiment, favorable antenna characteristics can be attained by connecting the SPDT 24 to the element that results in an improvement during use of the second antenna 32. In addition, if, with the capacitive element 25 or the inductive element 26, which is an optimal constant number for switching for the whip antenna 31, sufficient characteristics cannot be secured during use of the second antenna 32, such a circuit configuration that would allow for a different connection impedance may be adopted.

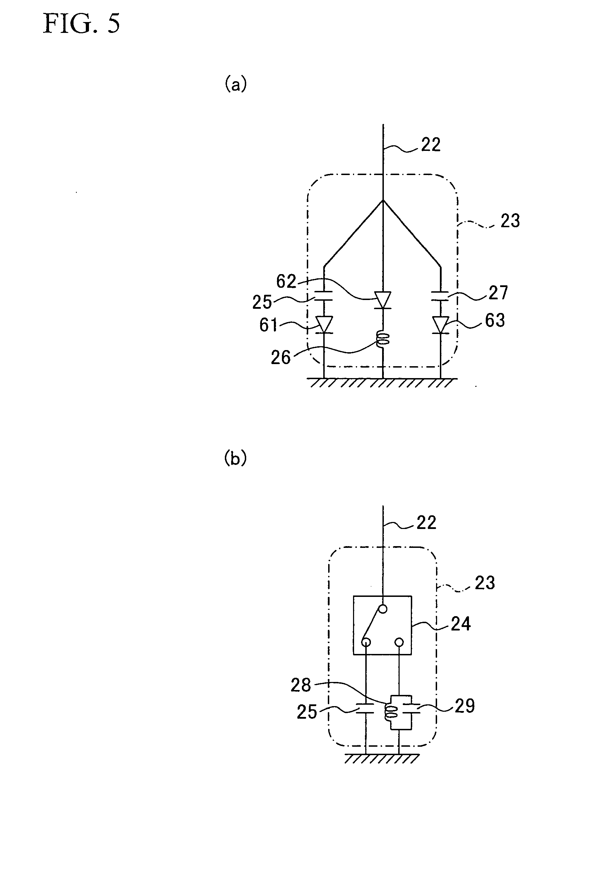

For example, as shown in Figure 5(a), the reactance-switchable reactance element 23 may be realized using three PIN diodes, namely, first, second and third PIN diodes 61, 62 and 63. A voltage is applied to the first, second and third PIN diodes 61, 62 and 63 by a bias circuit not shown in the drawings, and it is possible to switch each of them between on/off. It is assumed that the first and second PIN diodes 61 and 62 are connected to the capacitive element 25 and the inductive element 26, which are best suited for the antenna characteristics of the whip antenna 31, and that a capacitive element 27 connected to the third PIN diode 63 has an optimal capacitance value for the second antenna 32. Naturally, when the whip antenna 31 is in use, reactance may be switched using the first and second PIN diodes 61 and 62, and when the second antenna 32 is to be used, switching may be performed so that connection is made with the third PIN diode 63.

Also, when the third antenna, whose used band is the 2 GHz band, is used, as when the second antenna 32 is used, if the circuit of the reactance element 23 is adjusted so that the connection impedance would be optimal, favorable characteristics can be attained by switching the reactance.

It is noted that although a description is given above under the assumption that the reactance element at the point of connection that is switched to is only one of a capacitive element and an inductive element, if one or both of the second and third antennas 32 and 33 is/are simultaneously used with the whip antenna 31, the antenna characteristics of the second and third antennas 32 and 33 may in some cases be degraded depending on the reactance that is switched to. In order to avoid such degradation, it is preferable that there be provided an LC series resonant circuit or parallel resonant circuit to provide for an ideal impedance position for the whip antenna 31, while adjusting to an impedance position that prevents degradation for the second and third antennas 32 and 33.

A description is provided below citing a specific example. It is assumed that when the connecting element 22 is connected to the inductive element 26 in order to secure antenna characteristics for the whip antenna 31, the antenna characteristics of the third antenna 33 deteriorate, and that when the connecting element 22 is connected to the capacitive element 25, the antenna characteristics of the third antenna 33 improve. In this case, as shown in Figure 5(b), by arranging the inductive element 26 in Figure 5(a) as a parallel resonant circuit, and adjusting the constant values of an inductive element 28 and a capacitive element 29 so that this parallel resonant circuit would take on the inductance value of the inductive element 26 in the UHF band and the capacitance value of the capacitive element 25 in the 2 GHz band, it becomes possible to simultaneously use both the whip antenna 31 and the third antenna 33 without impairing antenna characteristics. Through such an adjustment, the respective antennas can be used simultaneously.

In addition, since the electrical dimensions of the second and third antennas 32 and 33 are not as large as those of the whip antenna 31, there is a possibility that antenna characteristics may improve by switching the connection impedance of the first and second circuit members 11 and 12 during use in the closed state as well. In such a case, it is preferable that the reactance of the reactance element 23 be switched in the closed state as well.

In addition, although in the present embodiment, a feed portion 42 of the second and third antennas 32 and 33 is provided at a corner portion on the opposite side to the feed portion 41 of the whip antenna 31, it may also be provided near the feed portion 41. In addition, although the second and third antennas 32 and 33 are disposed near the hinge portion 4, they may also be disposed at the lower portion of the second casing 2.

In addition, although the second and third antennas 32 and 33 are shown as being substantially L-shaped, they may also be antennas of other forms such as helical antennas.

In addition, although the whip antenna 31, the second antenna 32 and the third antenna 33 are described above as being antennas whose used bands are the UHF band, the 800 MHz band and the 2GHz band, respectively, the used band of each antenna and the number of antennas are not limited to those presented in the present embodiment.

### (Third Embodiment)

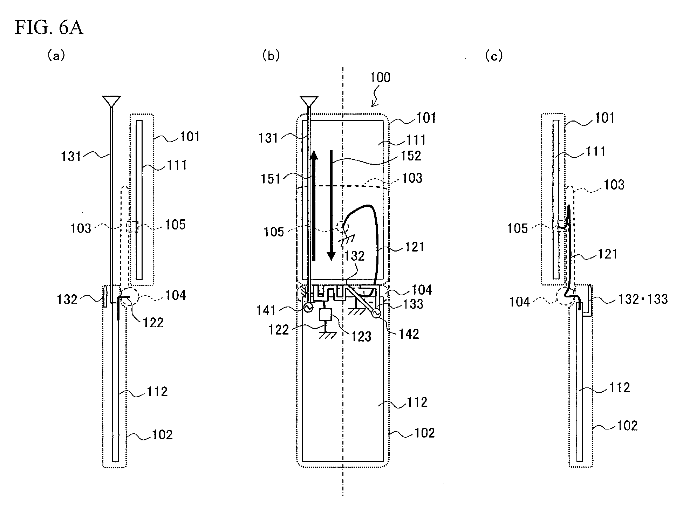

The third embodiment of the present invention is described below with reference to the drawings. As shown in Figures 6A(a) through (c), a portable wireless apparatus 100 according to the present embodiment comprises: first and second circuit members 111 and 112 within first and second casings 101 and 102 that are openably/closably joined by a third casing 103 including a hinge portion 104; and first, second and third antennas 131, 132 and 133 at the second casing 102 near the hinge portion 104, wherein the first and second circuit members 111 and 112 are connected with a thin coaxial cable 121, which includes a signal line for transmitting electrical signals, passing through the interior of the third casing 103. Further, the third casing 103 including the hinge portion 104 comprises an electrically conductive member. This third casing 103 and the second circuit member 112 are connected with, via a reactance-switchable reactance element 123, a connecting element 122 comprising an electrical conductive pattern, etc., on a sheet metal or a substrate. This third casing 103 comprises a rotation mechanism portion 105, which comprises an electrically conductive member and enables the first casing 101 to rotate by approximately 90 degrees within substantially the same plane. A radio-frequency connection is established between this rotation mechanism portion 105 and the first circuit member 111 with a spring, etc. The first and second circuit members 111 and 112 are so connected that the connection impedance is switchable as in the first embodiment by interposing the third casing 103.

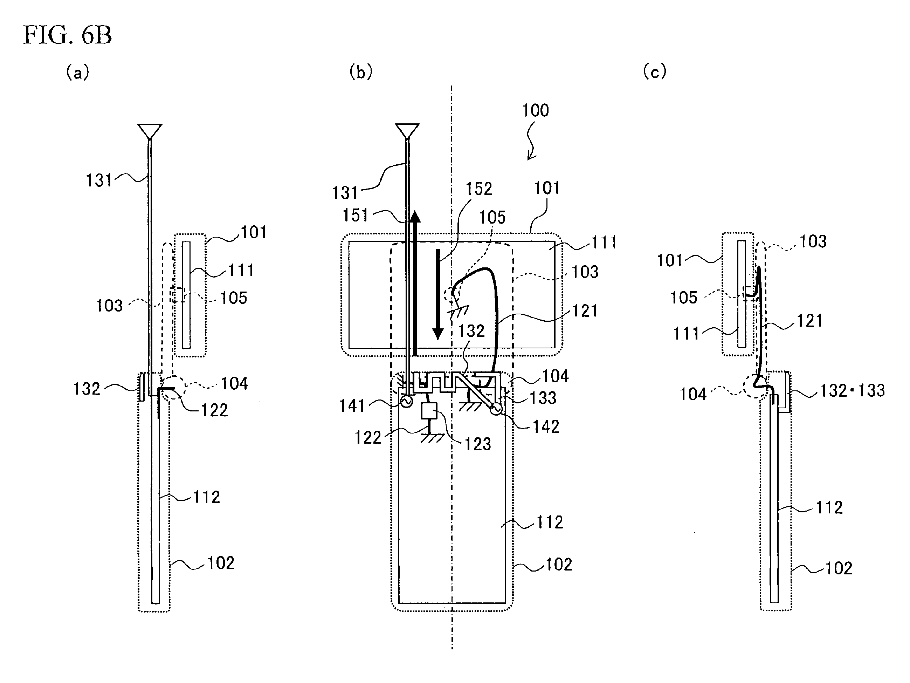

Figures 6A(a) through (c) show a first state where the first casing 101 is linearly opened. Figures 6B(a) through (c) show a second state where the first casing 101 has been rotated from the first state by 90 degrees within the same plane. There is provided on the first casing 101 a display portion, which is not shown in the drawings, for viewing such information as text, etc., and a display with favorable viewability suited for a given content is possible by rotating the display portion.

It is noted that the portable wireless apparatus 100 is so configured that it is possible to identify, with known detection means using a magnetic sensor, etc., not shown in the drawings, whether the first casing 101 is in the first state, the second state or a closed state.

Since the first antenna 131 overlaps with the first circuit member 111 in both the first and the second states, as in the first embodiment, degradation in antenna characteristics is caused as a result of a reverse-phase current 152 occurring in the first casing 101 canceling out a current 151 flowing in the first antenna 131. In particular, with the dimensions of standard portable wireless apparatus of late, there is a strong chance that the reverse-phase current 152 in the present embodiment would occur within the band of the UHF band. A description is hereinafter provided under the assumption that the band the whip antenna 131 uses is the UHF band.

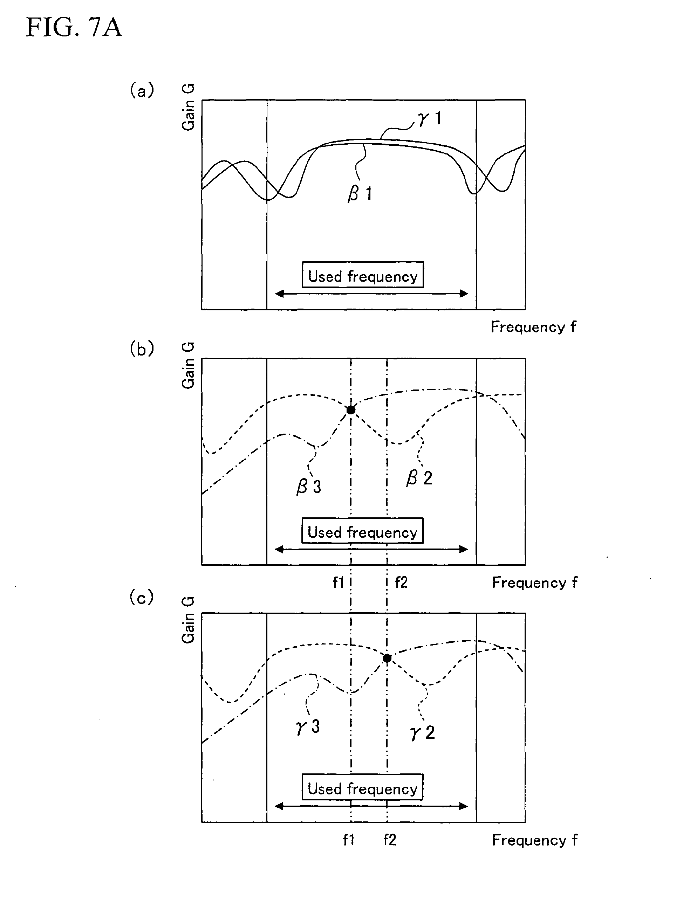

Solid lines β1 and γ1 in Figure 7A(a) are charts representing frequency characteristics β1 of the gain of the first antenna 131 in the first state and frequency characteristics γ1 of the gain of the first antenna 131 in the second state in a case where the portable wireless apparatus 100 is not equipped with the connecting element 122 and the reactance element 123. In the second state, since the path of the reverse-phase current 152 becomes shorter than in the first state, the frequency at which the reverse-phase current 152 occurs is further to the upper-band side than in the first state. Here, in the second state, since the area over which the first antenna 131 and the first circuit member 111 overlap with each other decreases as compared to the first state, the electrical dimensions of the first antenna 131 increase, resulting in slightly more favorable antenna characteristics as compared to the first state.

It is noted that frequency characteristics β1 of the gain in the first state in the present embodiment are such that degradation in antenna characteristics caused by the basic mode and higher-order mode of the reverse-phase current 152 is observed further towards the lower-band side than for frequency characteristics α1 (Figure 2(a)) of gain in the first embodiment. This is due to the fact that, in the present embodiment, because the thin coaxial cable 121 connects the first and second circuit members 111 and 112 while passing through the interior of the third casing 103 and making a detour, the path of the reverse-phase current 152 becomes longer, thereby elongating the electrical length of the first circuit member. In addition, there was observed a tendency for the intervals between the frequencies at which the basic mode and higher-order mode of the reverse-phase current 152 occur to become narrower the longer the thin coaxial cable 121 becomes. Therefore, when, as in the first embodiment, the first and second casings 1 and 2 are compactly connected with the thin coaxial cable 21, there is a possibility that the connecting element 22 would not be needed or a possibility that no reactance switching would be needed. However, in the present embodiment, the possibility that reactance switching would be needed is extremely high.

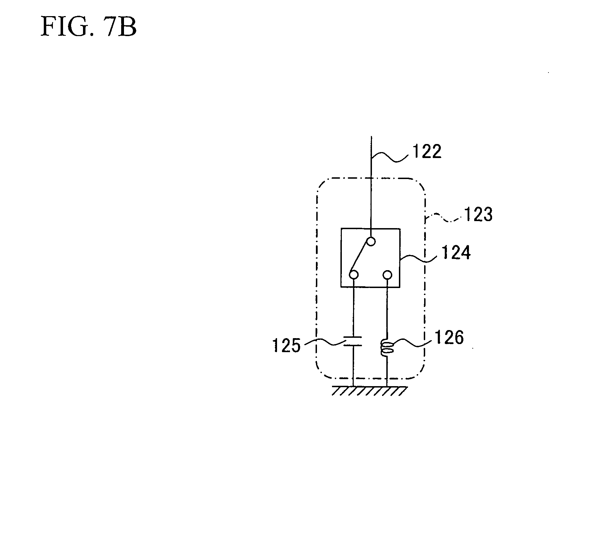

Figure 7B is a diagram showing an example in which the reactance-switchable reactance element 123 is realized using the SPDT 124 in such a manner that it can selectively be made capacitive/inductive depending on the frequency. The SPDT 124 is switch controlled by applying a voltage through a bias circuit that is not shown in the drawings. In Figure 7A(b), frequency characteristics β2 of gain is a chart representing the characteristics in a case where the SPDT 124 is connected to the capacitive element 125 in the first state, and frequency characteristics β3 of gain is a chart representing the characteristics in a case where the SPDT 124 is connected to the inductive element 126 in the first state. As shown in Figure 7A(c), frequency characteristics γ2 of gain represents a case where the SPDT 124 is connected to the capacitive element 125 in the second state, and frequency characteristics γ3 of gain represents a case where the SPDT 124 is connected to the inductive element 126 in the second state. Since the same reactance element 123 is switched in each of the first and second states, frequency f1 at which frequency characteristics β2 and β3 of gain intersect in the first state and frequency f2 at which frequency characteristics γ2 and γ3 of gain intersect in the second state never coincide.

Although the number of elements to be switched between may be increased so that frequencies f1 and f2 would be the same frequency, in such cases, costs would increase due to the increase in the number of components. In the present embodiment, because discrimination between the first and second states is possible, there is an advantage in that favorable antenna characteristics can be attained across the entire band of the UHF band regardless of the state of the terminal by switching the reactance element 123 at f1 in the first state and switching the reactance element 123 at f2 in the second state.

It is noted that when the second and third antennas 132 and 133 are in use, it is preferable that adjustment be possible as in the second embodiment, and that the reactance element 123 be switched in accordance with the frequency for each of the first, second and closed states as with the whip antenna 131 of the present embodiment.

In addition, the connecting element 122 may, without connecting to the third casing 103, directly connect the first and second circuit members 111 and 112 with an electrically conductive cable, etc., that passes through the interior of the third casing 103 like the thin coaxial cable 121. In that case, the third casing 103 need not be electrically conductive.

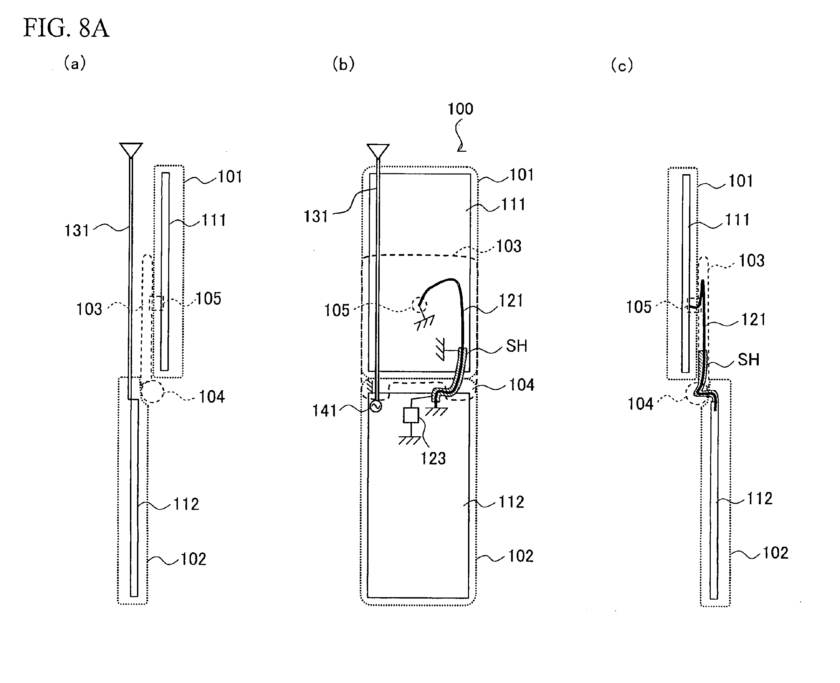

In addition, although the connecting element 122 is disposed on the opposite side to the thin coaxial cable 121, it may also be disposed on the same side. For example, as shown in Figures 8A(a) through (c), the thin coaxial cable 121 may be covered with an electrically conductive shield SH that is insulated from the thin coaxial cable 121, and the shield SH may be placed in electrical contact with the third casing 103 and connected to the second circuit member 112 via the reactance element 123. Since an existing space set aside for the thin coaxial cable 121 can be utilized by adopting such a configuration, there is an advantage in that there is no need to provide a new space for the placement of the reactance element 123.

In addition, the number of connecting elements is not limited to one, and a plurality of connecting elements may be disposed for example by disposing connecting elements via reactance switching elements on both the same side as and the opposite side to the thin coaxial cable 121. By adopting such a configuration, freedom of adjustment of the connection impedance of the first and second casings 101 and 102 increases, and even more favorable antenna characteristics are attained for each antenna.

Thus, the positional relationship(s) between the whip antenna 131, the second and third antennas 132 and 133, the thin coaxial cable 121, and the connecting element 122 is/are not limited to those presented in the respective embodiments above.

In addition, although the present embodiment is presented as a structure in which the second state is one in which an approximately 90-degree rotation takes place within substantially the same plane near the center of the first casing 101, the rotation mechanism portion may also be made rotatable by approximately 90 degrees to both the left and the right within substantially the same plane at a portion towards the second casing from the center.

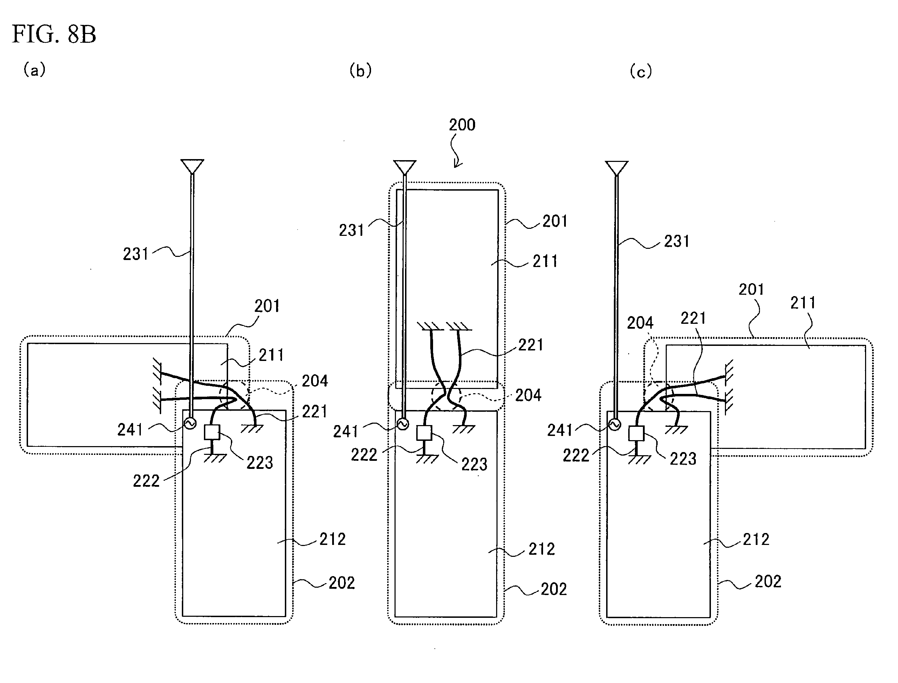

In addition, from the perspective that the path of the reverse-phase current changes as a result of the upper casing rotating within substantially the same plane, the portable wireless apparatus 100, as shown in Figures 8B(a) through (c), may comprise instead of the third casing, as shown with respect to a portable wireless apparatus 200 in Figure 8B(b), a hinge 204 comprising a mechanism that is capable of opening/closing and of rotating a first casing 201 so as to enable rotation by approximately 90 degrees each (Figure 8B(a) and Figure 8B(c)) within substantially the same plane. In the case of the state in Figure 8B(a) or 8B(c) where a rotation by approximately 90 degrees within substantially the same plane has taken place, because the path of reverse-phase current changes from the state in Figure 8B(b) as with the portable wireless apparatus 100, favorable antenna characteristics are attained by switching the connection impedance in accordance with the frequency as in the present embodiment. In addition, although similar reverse-phase currents flow in Figure 8B(a) and Figure 8B(c), electrical dimensions are greater in Figure 8B(c) because there is no portion where a whip antenna 231 and the first casing 201 overlap with each other, and better antenna characteristics than in Figure 8B(a) are attained. Thus, there is a possibility that the frequencies and reactance values for switching may be different between Figure 8B(a) and Figure 8B(c). In that case, it is preferable that switching be performed for each of the states of Figure 8B(a) and Figure 8B(c) as well by detecting whether rotation is to the left or to the right.

It is possible to attain favorable antenna characteristics in the respective frequency bands for each state of the portable wireless apparatus through the respective configurations above.

### INDUSTRIAL APPLICABILITY

The present invention is applicable to portable wireless apparatus.

## Claims

1. A foldable portable wireless apparatus comprising:
a first casing;
a second casing;
a first circuit member housed within the first casing;
a second circuit member housed within the second casing;
a hinge portion that openably/closably joins the first casing and the second casing;
an antenna disposed at the second casing near the hinge portion; and
a cable including a signal line that connects the first circuit member and the second circuit member, wherein
the portable wireless apparatus comprises a connecting element that connects the first circuit member and the second circuit member via a reactance element that is capable of switching reactance to a side in which gain becomes higher depending on the used frequency.

2. A portable wireless apparatus comprising:
a first casing;
a second casing;
a first circuit member housed within the first casing;
a second circuit member housed within the second casing;
a third casing comprising a rotation mechanism portion, which renders the first casing rotatable, and a hinge portion, which renders the second casing openable/closable;
a cable including a signal line that connects the first circuit member and the second circuit member; and
an antenna disposed at the second casing near the hinge portion, wherein
the portable wireless apparatus comprises a connecting element that connects the first circuit member and the second circuit member via a reactance element that is capable of switching reactance to a side in which gain becomes higher depending on the used frequency.

3. The portable wireless apparatus according to claim 2, wherein the third casing comprises an electrically conductive member and forms part of the connecting element by establishing a radio-frequency connection with the first circuit member at the rotation mechanism portion.

4. The portable wireless apparatus according to any one of claims 1 to 3, wherein the antenna is a whip antenna for television reception.

5. The portable wireless apparatus according to any one of claims 1 to 4 comprising, near the hinge portion, a plurality of antennas that are respectively excited at desired frequencies.

6. The portable wireless apparatus according to any one of claims 1 to 5 comprising, at a lower portion on a side of the second casing opposite the first casing, one or more antennas that are respectively excited at desired frequencies.

7. The portable wireless apparatus according to any one of claims 1 to 6, wherein the reactance element is capable of switching reactance at a given frequency for each state of
a first state in which the first casing opens linearly relative to the second casing, a second state in which the first casing is rotated by approximately 90 degrees within substantially the same plane from the first state, and
a third state in which the first casing and the second casing close from the first state so as to substantially overlap with each other.

8. A foldable portable wireless apparatus comprising:
a first casing;
a second casing;
a first circuit member housed within the first casing;
a second circuit member housed within the second casing;
a hinge portion that openably/closably joins the first casing and the second casing;
an antenna disposed at the second casing near the hinge portion; and
a cable including a signal line that connects the first circuit member and the second circuit member, wherein
the portable wireless apparatus comprises a connection impedance switching mechanism that switches the connection impedance between the casings at a given frequency.

9. The portable wireless apparatus according to claim 8, wherein the connection impedance switching mechanism performs switching by pairing up used frequency and connection impedance depending on the positional relationship between the first casing and the second casing.

10. A reactance element or connection impedance switching mechanism for use in the portable wireless apparatus according to any one of claims 1 to 9.

11. A reactance element switching method for the portable wireless apparatus according to any one of claims 1 to 9, the switching method comprising:
a step of reading out, when a remote control key ID is received, from a frequency table stored in a storage portion a center frequency of a broadcast corresponding to the remote control key ID that is inputted, and of issuing an instruction to switch the broadcast to reception of the center frequency;
a step of comparing a frequency for which a broadcast tuning operation has been instructed and the center frequency; and
a step of controlling so as to set the connection within the reactance element to the side of a capacitive element if the instructed frequency is equal to or less than the center frequency, and of controlling so as to set the connection within the reactance element to the side of an inductive element if the instructed frequency is equal to or greater than the center frequency.

## Amended claims

### Amended claims under Art. 19.1 PCT

1. (Canceled)

2. (Canceled)

3. (Canceled)

4. (Canceled)

5. (Canceled)

6. (Canceled)

7. (Canceled)

8. (Canceled)

9. (Canceled)

10. (Canceled)

11. (Canceled)

12. (New) A portable wireless apparatus comprising:
a first casing;
a second casing;
a first circuit member housed within the first casing;
a second circuit member housed within the second casing;
a mechanism portion that connects the first casing and the second casing in such a manner that the first casing can assume a plurality of positions where it is rotated substantially within a plane;
an antenna disposed at the second casing near the mechanism portion;
a cable including a signal line that connects the first circuit member and the second circuit member; and
a reactance element that is capable of reactance switching and that connects the first circuit member and the second circuit member.

13. (New) The portable wireless apparatus according to claim 12, wherein the reactance element switches to a different reactance when the position of the first casing is different.

14. (New) The portable wireless apparatus according to claim 12 or 13, wherein the reactance element switches reactance depending on the frequency that the antenna uses.

15. (New) The portable wireless apparatus according to any one of clams 12 to 14, wherein the mechanism portion comprises an electrically conductive member and forms part of the reactance element by establishing a high-frequency connection with the first circuit member.

16. (New) The portable wireless apparatus according to any one of claims 12 to 15, wherein the antenna is a whip antenna.

17. (New) The portable wireless apparatus according to any one of claims 12 to 16, further comprising:
a second antenna disposed at the second casing; and
a control portion that controls the portable wireless apparatus, wherein
the control portion switches the reactance of the reactance element depending on the antenna that is used.

18. (New) The portable wireless apparatus according to any one of claims 12 to 17, wherein reactance is switchable for each state of:
a first state in which the first casing opens linearly relative to the second casing;
a second state in which the first casing is rotated by approximately 90 degrees substantially within a plane from the first state; and
a third state in which the first casing and the second casing substantially overlap with each other from the first state.

19. (New) The portable wireless apparatus according to any one of claims 12 to 18, wherein when the first casing is moved relative to the second casing, the overlap between the first casing and the antenna changes, and the reactance element switches reactance.
